# EUROPÄISCHE PATENTSCHRIFT

(11) **EP 1 032 466 B1**
(45) Veröffentlichungstag und Bekanntmachung des Hinweises auf die Patenterteilung: **16.01.2002**
(21) Anmeldenummer: 99942825.3
(22) Anmeldetag: 09.08.1999
(51) Int. Cl.: B01D 29/11, B01D 35/16

(54) **VERFAHREN ZUR REINIGUNG VON FILTERGEHÄUSEN**
METHOD FOR CLEANING FILTER HOUSINGS
PROCEDE POUR NETTOYER DES LOGEMENTS DE FILTRE

(30) Priorität: 22.09.1998 DE 19843308
(43) Veröffentlichungstag der Anmeldung: 06.09.2000
(73) Patentinhaber: KHS Maschinen- und Anlagenbau Aktiengesellschaft, Patentabteilung, 44143 Dortmund (DE); Seitzschenk Filtersystems GmbH, 73550 Waldstetten (DE)
(72) Erfinder: KRÜGER, Roland, D-58313 Herdecke (DE); KOLCZYK, Markus, D-73550 Waldstetten (DE); KUHNT, Rainer, D-73529 Schwabisch-Gmünd (DE); OECHSLE, Dietmar, D-73529 Schwäbisch Gmünd (DE)
(86) Internationale Anmeldenummer: EP9905779
(87) Internationale Veröffentlichungsnummer: WO0016876

(56) Entgegenhaltungen:
- EP-A- 0 481 391
- DE-A- 2 363 040
- GB-A- 1 230 833
- US-A- 4 213 861

## Beschreibung

Die Erfindung bezieht sich auf ein Verfahren zur Reinigung von Filtergehäusen, insbesondere zur Reinigung des Unfiltratraumes von Kesselfiltern, wobei Filterkerzen an einem Zwischenboden, der den Filtratraum von dem Unfiltratraum trennt, gehalten sind und der Unfiltratraum mit Reinigungs-Flüssigkeit beaufschlagbar ist, sowie auf eine Vorrichtung zur Reinigung derartiger Filtergehäuse.

Bei einem bekannten Verfahren zur Reinigung einer Filtereinrichtung wird der auf der Unfiltratseite der Filtereinrichtung an dem Filter eingestellte Filterkuchen dadurch entfernt, daß der zuführungsseitige Innenraum sowie ein Teil des oberhalb des zuführungsseitigen Innenraums gelegenen Filtratraumes bei geschlossener Abführungsseite von der Unfiltratseite her mit Wasser gefüllt ist, wobei die über dem Wasser stehende Luft in dem Filtratraum zusammengepreßt wird. Nach dem Einfüllen des Wassers und der Zusammenpressung der Luft im oberen Teil des Filtratraumes wird ein Abfluß auf der Unfiltratseite schlagartig geöffnet, so daß die unter Druck stehende Luft eine intensive Rückströmung des im Filtratraum befindlichen Wassers durch das Filter hindurch bewirkt und dadurch der auf der Unfiltratseite des Filters angeschwemmte Filterkuchen vom Filter gelöst wird und sich mit dem im Unfiltratraum befindlichen Wasser vermischt und mit diesem durch den Abfluß aus der Filtereinrichtung entfernt wird.

Dieses Verfahren ist zwar relativ einfach, hat aber einen entscheidenden Nachteil, der darin zu sehen ist, daß der von dem Filter abgelöste Filterkuchen mit einer Wassermenge vermischt wird, die annähernd gleich dem Gesamtvolumen beider Innenräume der Filtriereinrichtung ist. Da dieses mit dem Filterkuchen vermischte Wasser nicht in dieser Form in das Abwasser eingeleitet werden kann, ist nachträglich noch eine umständliche Trennung des Trubes von dem Wasser erforderlich. Dadurch werden relativ hohe Anlagenkosten und auch nicht unbeträchtliche Unterhaltungskosten verursacht. Im Anschluß sind der Unfiltratraum bzw. dessen Wandungen zu reinigen.

Bei einem weiteren bekannten Verfahren zur Reinigung einer Filtereinrichtung mit eingebauten Filterkerzen wird eine Reinigungsflüssigkeit in einem gesonderten Behälter auf Überdruck gebracht und zur Durchführung der Reinigung über eine Zuleitung der Abführungsseite der Filtereinrichtung zugeführt und von da aus durch das Filter in der der Filtrierrichtung entgegengesetzten Richtung hindurchgepreßt. Zur Beförderung der Reinigungsflüssigkeit von dem gesammelten Behälter zur Filtriereinrichtung wird ein unter Überdruck stehendes gasförmiges Medium verwendet.

Als Reinigungsflüssigkeit wird dabei zweckmäßig Wasser und als gasförmiges Medium Luft verwendet. Zur Verteilung der Reinigungsflüssigkeit sind dabei jeweils am abführungsseitigen Kerzenende angebrachte düsenförmige Verengungen oder im Abstand von dieser Verengung im Kerzeninneren angebrachte Prallkörper vorgesehen, mit welchen die einströmende Reinigungsflüssigkeit nach allen Seiten in Richtung der Kerzeninnenwände abgelenkt wird.'

Als Nachteil ist hierbei anzusehen, daß die düsenförmigen Verengungen sowohl für die Zuleitung der Reinigungsflüssigkeit in das Innere der Filterkerze wie auch für die Druckluft vorgesehen sind, so daß bei Aufgabe eines Druckimpulses ein Nachlauf von Reinigungsflüssigkeit nicht möglich ist. Eine Reinigung des Kesseiinnenraumes bzw. dessen Wandungsteile sind mit diesem Verfahren nicht möglich.

Ferner ist es bekannt, den unteren Raum eines Kesselfilters mit einer vertikal umlaufenden Düsengruppe zu reinigen.

Ein derartiges Reinigungsverfahren erlaubt nur die Reinigung des unter den Filterkerzen befindlichen Freiraums. Oberhalb dieses Freiraums befindliche Wandungsteile des Kesselfilters können damit nicht beaufschlagt und entsprechend den Anforderungen gereinigt werden. Hinzu kommt, daß die fest an einem Rotor angebrachten Düsengruppen einen gleichbleibenden bzw. gleichgerichteten Spritzstrahl verursachen, mit dem lediglich bestimmte Bereiche beaufschlagt werden können.

Der Erfindung liegt die Aufgabe zugrunde, die Innenwandungen eines solchen Filters bereits vom oberen Bereich aus im wesentlichen allumfassend mit Reinigungsflüssigkeit beaufschlagen zu können.

Gemäß der vorliegenden Erfindung wird diese Aufgabe bei einem Verfahren zur Reinigung von Filtergehäusen der eingangs genannten Art dadurch gelöst, daß im oberen Bereich des Unfiltratraumes ein Reinigungsmedium gegen die Unterwand des Zwischenbodens und/oder den oberen Bereich der Wandung des Unfiltratraumes mit einer solchen Strömungslenkung gerichtet ist, daß ein im wesentlichen geschlossener Reinigungsfilm von der oberen Wandung des Unfiltratraumes an dieser herableitbar ist.

In einer eigenständigen Ausbildung wird ferner vorgeschlagen, daß ein Reinigungsmedium im oberen Bereich des Unfiltratraumes von außen zugeführt und umlaufend an der Wandung des Unfiltratraumes filmförmig abgeleitet wird.

Bei einem Kesselfilter wird ferner vorgeschlagen, daß die Reinigungseinrichtung als im oberen äußeren Bereich des Unfiltratraumes angeordneter Spritzring ausgebildet ist, dessen Spritzdüsen gegen die äußere Unterwand des Zwischenbodens und/oder den oberen Bereich der Wandung des Unfiltratraumes gerichtet sind und mit einer Strömungslenkungseinrichtung zusammenwirken.

Ferner wird vorgeschlagen, daß die Reinigungseinrichtung aus einer Ausnehmung im Auflagebereich des Zwischenbodens mit dem Unfiltratraum besteht und diese mit von außen zugeführter Reinigungsflüssigkeit beaufschlagbar ist.

Weitere Merkmale ergehen aus den Unteransprüchen.

Mit dem erfindungsgemäßen Verfahren und der vorgeschlagenen Vorrichtung ist eine vorteilhafte Reinigung der Wandungsteile eines solchen Unfiltratraumes auf einfache Weise durchführbar. Insbesondere wird duch die Ausbildung ein im wesentlichen geschlossener Rieselfilm erzeugt, der praktisch von dem oberen Wandungsbereich nach unten verläuft und die noch aufgeweichten Bestandteile des Unfiltrats bzw. der Anschwemmmasse abspült.

Bei der Verwendung eines umlaufenden Spülrohres oder Spritzringes wird durch gezielte Verteilung der Reinigungsflüssigkeit mit Strömungslenkung gegen die entsprechend ausgebildeten oberen Wandungsteile eine optimale Filmbildung erzeugt. Diese kann zudem durch periodische Beaufschlagung der Düsen eines solchen Spritzringes eine weitere Verbesserung erfahren. Insbesondere wird dadurch ein zusätzlicher Abschäleffekt erzielt.

Die gleiche Wirkung wird auch erreicht, wenn die Reinigungsflüssigkeit von außen zugegeben und deren Menge derart gesteuert wird, daß ebenfalls ein Rieselfilm den Wandungen zugeführt wird.

Im nachfolgenden wird die Erfindung anhand von in den Zeichnungen dargestellten Ausführungsbeispielen näher erläutert. In der Zeichnung zeigt:
Figur 1 einen Kesselfilter in vereinfachter Darstellung und
Figur 2 - 8 verschiedene Varianten zur Reinigung mit unterschiedlichen Strömungslenkungseinrichtungen.

Mit 1 ist ein haubenförmiger Filtratraum des Kesselfilters als Filtrationseinrichtung bezeichnet, unter dem sich ein Unfiltratraum 2 befindet. Der Unfiltratraum 2 besteht aus einem zylindrischen Teil mit einem sich nach unten kegelförmig verjüngenden Sammelraum 2', dessen Öffnungswinkel α etwa 40 bis 70° beträgt. Beide Räume 1 bzw. 2 sind durch einen Zwischenboden 3 mit Bohrungen zur Aufnahme von Filterelementen 4 voneinander getrennt. Der untere Teil des Sammelraumes 2' weist einen Stutzen 5 auf, der zur Zuführung und geeigneten Verteilung des Unfiltrats und zur Ableitung der Filterrückstände dient.

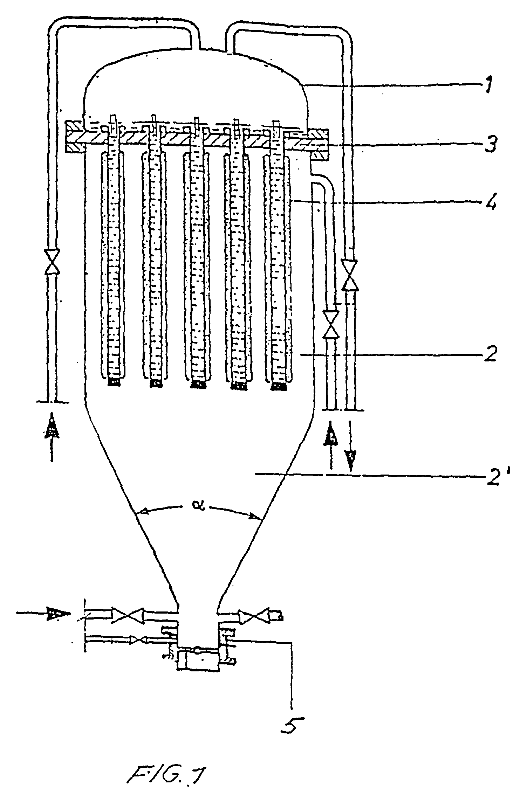

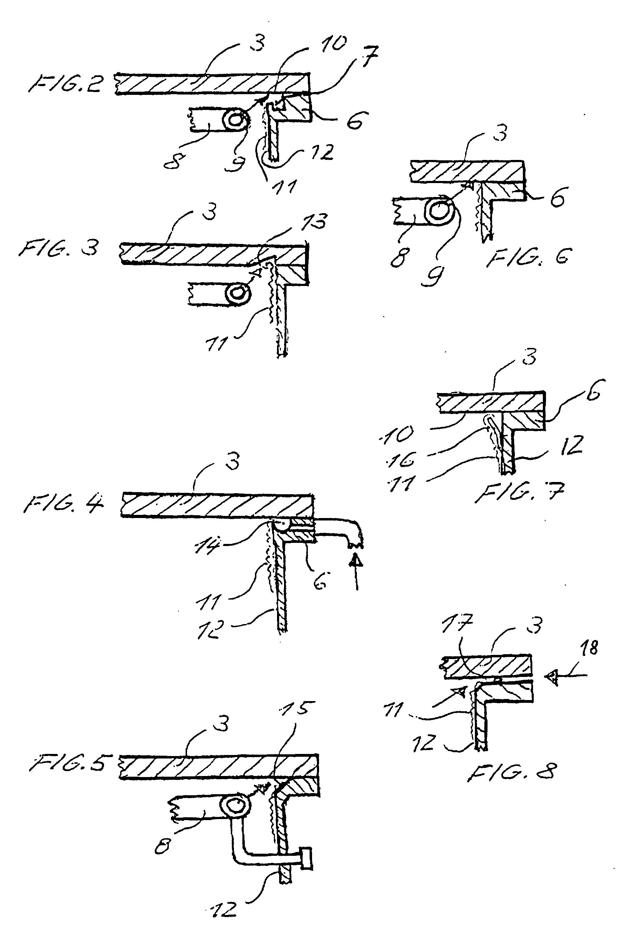

Die Figuren 2 bis 8 der Zeichnung zeigen einen vergrößerten Ausschnitt des oberen Bereiches des Unfiltratraumes mit vereinfachter Darstellung des Zwischenbodens 3 ohne die aus Figur 1 ersichtlichen Filterelemente 4. Gemäß dem in Figur 2 dargestellten Ausführungsbeispiel befindet sich am oberen Ende des Unfiltratraumes 2 im Bereich des Anschlußflansches (6) zum Zwischenboden 3 eine vorzugsweise umlaufende Nute (7)-mit einem dazu auf Abstand angeordneten, ebenfalls umlaufenden Spritzring 8 mit einer Vielzahl von Spritzdüsen 9, die von einem nicht dargestellten Zuleitungsrohr mit Reinigungsflüssigkeit beaufschlagbar sind. Die Spritzdüsen 9 können als Breitstrahldüsen ausgebildet sein, so daß eine möglichst großzügige Fläche mit Reinigungsflüssigkeit beaufschlagt werden kann. Der Spritzstrahl richtet sich gegen die äußere Unterwand 10 des Zwischenbodens 3, der in diesem Falle als Strömungslenkungseinrichtung wirkt und die Flüssigkeit in die umlaufende Nute 7 abdrängt, aus welcher dann ein geschlossener Flüssigkeitsfilm 11 von der oberen Wandung 12 des Unfiltratraumes 2 nach unten verläuft. Die Beaufschlagung des Spritzringes 8 bzw. der Spritzdüsen 9 kann periodisch erfolgen, wodurch eine weitere verbesserte Reinigungswirkung an der Wandung 12 des Unfiltratraumes 2 erzielt wird.

Gemäß Figur 3 ist eine Ausnehmung 13 im Bereich des äußeren Randes des Zwischenbodens 3 vorgesehen, die ebenfalls den auftreffenden Spritzstrahl umlenkt und der Wandung 12 des Unfiltratraumes 2 zuführt.

Figur 4 zeigt eine Ausnehmung 14 im Bereich des oberen Anschlußflansches 6 des Unfiltratkessels, wobei diese Ausnehmung 14 von außen mit Reinigungsflüssigkeit gespeist wird. Gemäß dem in Figur 5 dargestellten Ausführungsbeispiels ist der Anschlußflansch 6 an der zum Innenraum des Unfiltratraumes weisenden Seite mit einer Anschrägung 15 versehen, an der die Spritzstrahlen nach Strömungsumlenkung filmförmig vereint nach unten abgeführt werden.

Figur 6 zeigt den Spritzring 8 mit Spritzdüsen 9, deren Spritzstrahl nach der Strömungsumlenkung an der Unterwand 10 zur Wandung 12 des Unfiltratraumes 2 geführt werden. Besondere Ausnehmungen wie in den anderen Beispielen sind hier nicht vorgesehen.

Nach dem in Figur 7 dargestellten Ausführungsbeispiel besitzt die Wandung 12 des Unfiltratraumes 2 einen aufgeschweißten oder anderweitig befestigten umlaufenden Blechring 16, der eine entsprechende Nute bildet, die von den Spritzdüsen 9 oder direkt von außen versorgt wird und ebenfalls für einen ablaufenden Film sorgt.

Das Ausführungsbeispiel nach Figur 8 zeigt Spritzstrahlen, die in den von dem Flansch 6 und Zwischenboden 3 verbleibenden Zwischenraum 17 gerichtet sind, wobei die Spritzstahlen ebenfalls umgelenkt werden und geschlossen in Form des gewünschten Flüssigkeitsfilms an der Wandung ablaufen: Gleichzeitig kann in diesem Bereich auch eine Versorgung mit Spritzflüssigkeit gemäß Pfeil 18 von außen vorgesehen sein, wobei die den Zwischenboden von dem Flansch trennende Dichtung im Bereich der Zuführung für Reinigungsflüssigkeit stellenweise unterbrochen ist.

Es können weitere Varianten vorgesehen sein, mit denen das gewünschte Ziel, einen möglichst geschlossenen Flüssigkeitsfilm 11 entlang der Wandung 12 zu erreichen, erzielt werden. Es ist auch denkbar, mehrere solcher Spritzringe innerhalb des Bereiches des Unfiltratraumes höhenmäßig versetzt zueinander anzuordnen und die Spritzstrahlen gegen die Kesselwand direkt oder in entsprechende Ausnehmungen zu leiten.

## Patentansprüche

1. Verfahren zur Reinigung von Filtergehäusen, insbesondere zur Reinigung des Unfiltratraumes (2) von Kesselfiltern, wobei Filterkerzen (4) an einem Zwischenboden (3), der den Filtratraum (1) von dem Unfiltratraum (2) trennt, gehalten sind und der Unfiltratraum mit Reinigungs-Flüssigkeit beaufschlagbar ist, ***dadurch gekennzeichnet,* daß** im oberen Bereich des Unfiltratraumes (2) ein Reinigungsmedium gegen die Unterwand des Zwischenbodens (3) und/oder den oberen Bereich der Wandung des Unfiltratraumes (2) mit einer solchen Strömungslenkung gerichtet ist, daß ein im wesentlichen geschlossener Reinigungsfilm (11) von der oberen Wandung (12) des Unfiltratraumes (2) an dieser herableitbar ist.

2. Verfahren gemäß Oberbegriff des Anspruchs 2, ***dadurch gekennzeichnet,* daß** ein Reinigungsmedium im oberen Bereich des Unfiltratraumes (2) von außen zugeführt und umlaufend an der Wandung (12) des Unfiltratraumes (2) filmförmig abgeleitet wird.

3. Verfahren nach Anspruch 1, ***dadurch gekennzeichnet,* daß** die Strömungslenkung im oberen Bereich des Unfiltratraumes (2) durch Ausnehmungen (13) am äußeren Rand des Zwischenbodens (3) erfolgt.

4. Verfahren nach Anspruch 1, ***dadurch gekennzeichnet,* daß** die Strömungslenkung im oberen Bereich des Unfiltratraumes (2) durch Ausnehmungen (14,15) in der Wandung (12) des Kesselmantels erfolgt.

5. Verfahren nach Anspruch 1, ***dadurch gekennzeichnet,* daß** das Reinigungsmedium einer umlaufenden Nute (7) der Kesselwand zugegeben und aus dieser als Flüssigkeitsfilm (11) ableitbar ist.

6. Verfahren nach den vorhergehenden Ansprüchen, ***dadurch gekennzeichnet,* daß** eine periodische Beaufschlagung mit Reinigungsmedium erfolgt.

7. Verfahren nach den vohergehenden Ansprüchen, ***dadurch gekennzeichnet*, daß** das Reinigungsmedium an mehreren höhenmäßig versetzt zueinander angeordneten Zonen in Ausnehmungen der Kesselwand und/oder gegen diese geleitet wird.

8. Kesselfilter zur Durchführung des Verfahrens nach den vorhergehenden Ansprüchen, bestehend aus einem Unfiltratraum und einem von diesem durch einen Zwischenboden getrennten Filtratraum, wobei der Zwischenboden in den Unfiltratraum reichende Filterkerzen aufnimmt und der Unfiltratraum mit Reinigungseinrichtungen ausgestattet ist, ***dadurch gekennzeichnet,* daß** die Reinigungseinrichtung als im oberen äußeren Bereich des Unfiltratraumes (2) angeordneter Spritzring (8) ausgebildet ist, dessen Spritzdüsen (9) gegen die äußere Unterwand (10) des Zwischenbodens (3) und/oder den oberen Bereich der Wandung (12) des Unfiltratraumes (2) gerichtet sind und mit einer Strömungslenkungseinrichtung zusammenwirken.

9. Kesselfilter nach Anspruch 8, ***dadurch gekennzeichnet,* daß** die Strömungslenkungseinrichtung als eine umlaufende Ausnehmung (13) im Bereich des äußeren Randes des Zwischenbodens (3) ausgebildet ist.

10. Kesselfilter nach Anspruch 8, ***dadurch gekennzeichnet,* daß** die Strömungslenkungseinrichtung als eine umlaufende Ausnehmung (14, 15) im oberen Bereich der Kesselinnenwandung ausgebildet ist.

11. Kesselfilter nach Anspruch 8, ***dadurch gekennzeichnet,* daß** die Strömungslenkungseinrichtung als eine in der oberen Kesselwand umlaufende Nute (7) ausgebildet ist.

12. Kesselfilter nach Anspruch 8, ***dadurch gekennzeichnet,* daß** die Strömungslenkungseinrichtung Wandungsteile der Kesselwand und/oder des Zwischenbodens sind.

13. Kesselfilter gemäß Oberbegriff des Anspruchs 8, ***dadurch gekennzeichnet,* daß** die Reinigungseinrichtung aus einer Ausnehmung (17) im Auflagebereich des Zwischenbodens (3) mit dem Unfiltratraum (2) besteht und diese mit von innen oder außen zugeführter Reinigungsflüssigkeit beaufschlagbar ist.

## Claims

1. Method of cleaning filter housings, more especially cleaning the non-filtrate chamber (2) of boiler filters, filter cartridges (4) being retained on an intermediate base (3), which separates the filtrate chamber (1) from the non-filtrate chamber (2), and the non-filtrate chamber being chargeable with cleaning fluid, **characterised in that**, in the upper region of the non-filtrate chamber (2), a cleaning medium is directed towards the lower wall of the intermediate base (3) and/or towards the upper region of the wall (12) of the non-filtrate chamber (2) with such a flow guidance that a substantially continuous cleaning film (11) can be diverted from the upper region of the non-filtrate chamber (2) to said wall (12).

2. Method according to the preamble of claim 1, **characterised in that** a cleaning medium is supplied in the upper region of the non-filtrate chamber (2) from externally and is diverted, film-like, in a circulatory manner to the wall (12) of the non-filtrate chamber (2).

3. Method according to claim 1, **characterised in that** the flow guidance in the upper region of the non-filtrate chamber (2) is effected by recesses (13) on the outer edge of the intermediate base (3).

4. Method according to claim 1, **characterised in that** the flow guidance in the upper region of the non-filtrate chamber (2) is effected by recesses (14, 15) in the wall (12) of the boiler casing.

5. Method according to claim 1, **characterised in that** the cleaning medium is added to a circumferential groove (7) of the boiler wall and can be diverted therefrom as fluid film (11).

6. Method according to the preceding claims, **characterised in that** a periodic charging with cleaning medium is effected.

7. Method according to the preceding claims, **characterised in that**, at a plurality of zones which are disposed in a vertically offset manner relative to one another, the cleaning medium is conducted into recesses of the boiler wall and/or towards the latter.

8. Boiler filter for accomplishing the method according to the preceding claims, comprising a non-filtrate chamber and a filtrate chamber which is separated from the latter by an intermediate base, the intermediate base accommodating filter cartridges which extend into the non-filtrate chamber, and the non-filtrate chamber being provided with cleaning means, **characterised in that** the cleaning means is in the form of a spray ring (8), which is disposed in the upper outer region of the non-filtrate chamber (2), the spray nozzles (9) of which ring are directed towards the outer lower wall (10) of the intermediate base (3) and/or towards the upper region of the wall (12) of the non-filtrate chamber (2) and co-operate with a flow guiding arrangement.

9. Boiler filter according to claim 8, **characterised in that** the flow guiding arrangement is in the form of a circumferential recess (13) in the region of the outer edge of the intermediate base (3).

10. Boiler filter according to claim 8, **characterised in that** the flow guiding arrangement is in the form of a circumferential recess (14, 15) in the upper region of the internal boiler wall.

11. Boiler filter according to claim 8, **characterised in that** the flow guiding arrangement is in the form of a groove (7) which extends in the upper boiler wall.

12. Boiler filter according to claim 8, **characterised in that** the flow guiding arrangement is wall parts of the boiler wall and/or of the intermediate base.

13. Boiler filter according to the preamble of claim 8, **characterised in that** the cleaning means comprises a recess (17) in the supporting region of the intermediate base (3) with the non-filtrate chamber (2), and said recess is chargeable with cleaning fluid supplied from internally or externally.

## Revendications

1. Procédé pour nettoyer des logements de filtres, en particulier pour nettoyer la zone sans filtrat (2) de filtres de chaudière, des filtres en forme de chandelles (4) étant maintenus au niveau d'un fond intermédiaire (3) qui sépare la zone à filtrat (1) de la zone sans filtrat (2), la zone sans filtrat pouvant être exposée à un liquide de nettoyage, **caractérisée en ce que,** dans la partie supérieure de la zone sans filtrat (2), un fluide de nettoyage est dirigé contre la paroi inférieure du fond intermédiaire (3) et/ou la partie supérieure de la paroi de la zone sans filtrat (2), en orientant l'écoulement de telle sorte qu'il soit possible d'obtenir un film de nettoyage (11) sensiblement fermé sur lui-même, à partir de la paroi supérieure (12) de la zone sans filtrat (2) et sur celle-ci.

2. Procédé selon le préambule de la revendication 1, **caractérisé en ce que** qu'un fluide de nettoyage est introduit par l'extérieur dans la partie supérieure de la zone sans filtrat (2) et se déverse de façon circulaire, pour former un film, sur la paroi (12) de la zone sans filtrat (2).

3. Procédé selon la revendication 1, **caractérisé en ce que** l'orientation de l'écoulement, dans la partie supérieure de la zone sans filtrat (2), est réalisée à travers des évidements (13) ménagés dans le bord externe du fond intermédiaire (3).

4. Procédé selon la revendication 1, **caractérisé en ce que** l'orientation de l'écoulement, dans la partie supérieure de la zone sans filtrat (2), est réalisée à travers des évidements (14, 15) ménagés dans la paroi (12) de l'enveloppe de la chaudière.

5. Procédé selon la revendication 1, **caractérisé en ce que** le fluide de nettoyage est introduit dans une gorge circulaire (7) de la paroi de la chaudière et peut s'en déverser sous forme de film liquide (11).

6. Procédé selon les revendications précédentes, **caractérisé en ce que** le fluide de nettoyage est introduit périodiquement.

7. Procédé selon les revendications précédentes, **caractérisé en ce que** le fluide de nettoyage est dirigé, dans plusieurs zones décalées en hauteur les unes par rapport aux autres, dans des évidements ménagés dans la paroi de la chaudière et/ou contre celle-ci.

8. Filtre de chaudière permettant de mettre en oeuvre le procédé selon les revendications précédentes, comprenant une zone sans filtrat et une zone à filtrat, séparée de celle-ci par un fond intermédiaire, le fond intermédiaire recevant des filtres en forme de chandelles qui s'étendent jusque dans la zone sans filtrat et la zone sans filtrat étant équipée de dispositifs de nettoyage, **caractérisé en ce que** le dispositif de nettoyage est conformé en bague de projection (8) montée dans la zone externe supérieure de la zone sans filtrat (2), dont les buses de projection (9) sont orientées contre la paroi inférieure externe (10) du fond intermédiaire (3) et/ou la zone supérieure de la paroi (12) de la zone sans filtrat (2), et coopèrent avec un dispositif d'orientation de l'écoulement.

9. Filtre de chaudière selon la revendication 8, **caractérisé en ce que** le dispositif d'orientation de l'écoulement est conformé en évidement circulaire (13) situé dans la zone du bord externe du fond intermédiaire (3).

10. Filtre de chaudière selon la revendication 8, **caractérisé en ce que** le dispositif d'orientation de l'écoulement est conformé en évidement circulaire (14, 15) situé dans la zone supérieure de la paroi interne de la chaudière.

11. Filtre de chaudière selon la revendication 8, **caractérisé en ce que** le dispositif d'orientation de l'écoulement est conformé en gorge circulaire (7) présente sur la paroi supérieure de la chaudière.

12. Filtre de chaudière selon la revendication 8, **caractérisé en ce que** le dispositif d'orientation de l'écoulement est constitué par des parties de la paroi de la chaudière et/ou par des parties du fond intermédiaire.

13. Filtre de chaudière selon le préambule de la revendication 8, **caractérisé en ce que** le dispositif de nettoyage est constitué d'un évidement (17) pratiqué dans la zone d'appui du fond intermédiaire (3) sur la zone sans filtrat (2), évidement par lequel peut pénétrer un liquide de nettoyage provenant de l'intérieur ou de l'extérieur.
